# EUROPEAN PATENT APPLICATION

(11) **EP 1 267 186 A2**
(43) Date of publication of application: **18.12.2002**
(21) Application number: 02254019.9
(22) Date of filing: 10.06.2002
(51) Int. Cl.: G02B 6/36, C03B 11/08, B29D 11/00

(54) **Mold for press-molding substrate for optical fiber array**

(30) Priority: 13.06.2001 JP 2001178318; 02.05.2002 JP 2002130715
(71) Applicant: NGK INSULATORS, LTD., Nagoya City Aichi Pref. (JP)
(72) Inventor: Matsumoto, Akira, c/o NGK Insulators, Ltd., Nagoya-city, Aichi-prefecture, 467-8530 (JP); Fukuyama, Masashi, c/o NGK Insulators, Ltd., Nagoya-city, Aichi-prefecture, 467-8530 (JP); Ide, Akiyoshi, c/o NGK Insulators, Ltd., Nagoya-city, Aichi-prefecture, 467-8530 (JP)
(74) Representative: Paget, Hugh Charles Edward

(57) **Abstract**

This invention is directed to a mold (30) for molding a substrate comprising upper and lower mold parts (30a,30b), said mold being provided with one or more guide grooves (33) in a predetermined position within the opposing internal surfaces of the upper and lower mold parts to receive one or more guide members (32), and being interposed between the internal surfaces at the predetermined position to maintain the vertical and horizontal alignment positions constant. A substrate having a pattern corresponding to the predetermined patterns with high precision in vertical and horizontal positions on both upper and lower sides thereof is molded by pressing simultaneously one or more of the guide members received in the guide grooves and the molding material (34) charged in a space defined by the opposing internal surfaces. The substrate is used in an optical fiber array.

## Description

### BACKGROUND OF THE INVENTION AND RELATED ART

The present invention relates to a mold for molding a substrate, a method for producing a substrate using the mold, and the substrate. More specifically, the present invention relates to a mold for molding a substrate capable of forming predetermined patterns in the relative positions so as to match each other with high precision using a glass-press technique, on both upper and lower sides of a substrate (for example, a glass substrate and a ceramic substrate) usable for an optical fiber array or the like, and a method for producing a substrate using the mold.

In various optical devices, optical fiber connecting components such as optical fiber arrays or optical connectors are used to connect a waveguide and an optical fiber or to connect optical fibers to one another.

An optical fiber array is a device equipped with a substrate having one or more high precision grooves, typically V-shaped grooves, in which optical fibers aligned and fixed. As materials for such a substrate, ceramics, glass, and glass-ceramics are typically used, whereas the high precision patterns of the V-shaped grooves are formed by means of grinding or by a press technique.

As a result of rapid diversification in optical switching technology and the like in recent years, demands for products with higher precision, higher efficiency, as well as diverse designs, are also increasing concerning optical fiber connecting components such as described above including, for example, a demand for adopting a two-dimensional structure for optical fiber arrangement. In response to these demands, various proposals are being made.

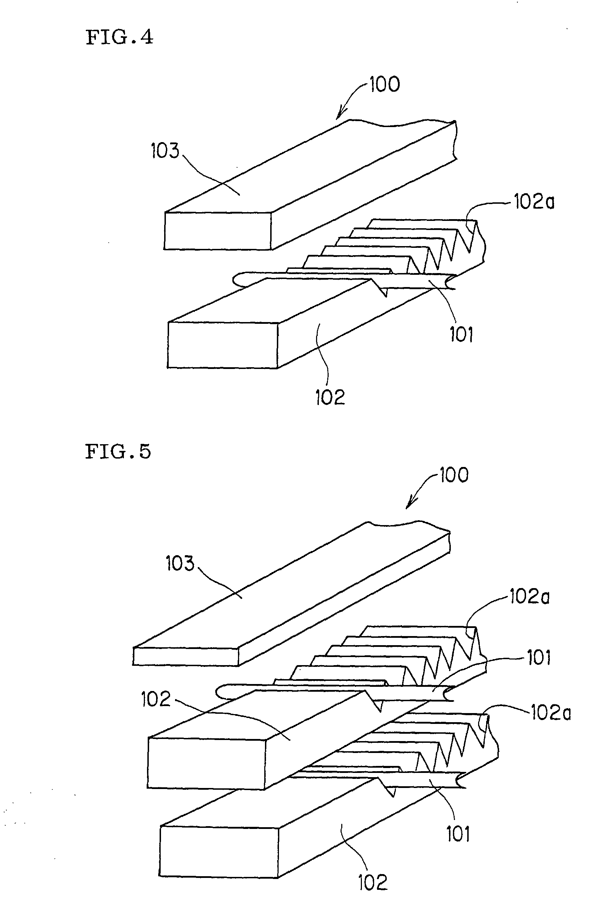

In the case of a typical optical fiber array as illustrated in Fig. 4, there is proposed an optical fiber array 100 wherein optical fibers 101 are arranged one by one on a substrate 102 having a plurality of V-shaped grooves 102a on one side, and subsequently the optical fibers 101 are affixed and secured to the substrate 102 with a cover substrate 103.

In the case of an optical fiber array that arranges the optical fibers 101 in a two-dimensionally fashion, such as illustrated in Fig. 5, there is proposed an optical fiber array 100 comprising a lamination of a multiple number of units wherein optical fibers 101 are arranged one by one on a substrate 102 having a plurality of V-shaped grooves 102a on one side, and subsequently the optical fibers 101 are affixed and secured linearly on the substrate 102 with a cover substrate 103.

However, in such an optical fiber array as described above, since it is difficult to align the relative position of substrates to each other with high precision, there is such a deficiency that the alignment precision sufficient for use in a two-dimensional type optical fiber array could not be obtained.

Because of this, the provision of a two-dimensional type optical fiber array is conceptually proposed by forming a pattern in the form of grooves on both upper and lower sides of a substrate in such a manner that their relative positions are matched, thereby aligning the relative position of substrates laminated to each other with high precision.

In practical terms, however, it is extremely difficult to form a pattern of grooves on both upper and lower sides of a substrate in such a manner that their relative positions are matched. Furthermore, it is virtually impossible to laminate such substrates while aligning their relative positions to each other with high precision and to provide a two-dimensional type optical fiber array having optical fibers arranged in between with high precision.

The present invention has been made in the light of the above-mentioned problems, and an object thereof is to provide a mold for molding a substrate that can form predetermined patterns with high precision using a press technique (for example, a glass-press and a ceramic powder molding), relative positions of these patterns being made to match each other, on both upper and lower sides of a substrate (for example, a glass substrate and a ceramic substrate) used for an optical fiber array or the like, and a method for producing using the mold.

### SUMMARY OF THE INVENTION

The present inventors, after extensive research conducted in an attempt to solve the aforementioned problems have found that the above-mentioned object can be achieved to complete the present invention by;
constructing a mold for molding a substrate in such a manner that one or more guide grooves are provided in a predetermined position on the internal surfaces opposing each other of the divided mold parts to receive one or more guide members therein; said one more guide members acting as a member to keep the alignment position of the divided mold parts constant at the top and bottom sides (hereinafter referred to as vertically or vertical position), and right and left sides (hereinafter referred to as horizontally or horizontal position), and
constructing a method for molding a substrate by receiving one or more guide members in one or more guide grooves of the above-mentioned divided mold parts, charging a molding material in a space defined by opposing internal surfaces of the divided mold parts, and pressing both the guide members and the molding material at the same time.

That is, the present invention provides the following mold for molding a substrate, method for producing a substrate, and the substrate.

According to the present invention, there is provided a mold for molding a substrate comprising a upper part and lower part of mold formed by dividing the mold into by upper and lower portions; said mold being used to mold a substrate having a predetermined pattern on both upper and lower sides by pressing a molding material charged in a space defined by internal surfaces opposing each other of said upper and lower mold parts, characterized in
that one or more guide grooves are provided in said upper and lower mold parts at a predetermined position within said internal surfaces of the upper and lower mold parts opposing each other to receive said one or more guide members by being interposed between said internal surfaces to keep the vertical and horizontal alignment positions constant for said upper and lower mold parts, and
that said mold is so constructed that a substrate is formed in such a manner that patterns corresponding to the predetermined patterns are formed with high precision in vertical and horizontal positions on both upper and lower sides of the substrate, by pressing simultaneously said one or more of guide members received in said guide grooves and said molding material charged in a space defined by said opposing internal surfaces.

There is also provided a substrate, characterized in that patterns corresponding to predetermined patterns are formed on both upper and lower sides of said substrate with high precision in vertical and horizontal positions by pressing simultaneously a guide member and a molding material charged in a space defined by internal surfaces of said upper and lower mold parts opposing each other; the substrate being formed with molding material only.

There is still provided with a method for producing a substrate, characterized by receiving one or more guide members in said one or more guide grooves formed on a mold for molding a substrate as recited in Paragraph 0013 above, charging a molding material in a space defined by said opposing internal surfaces of said upper part and lower mold part, pressing simultaneously said one or more guide members and said molding material to mold said substrate having a pattern corresponding to predetermined patterns with high precision in vertical and horizontal positions on both upper and lower sides thereof.

There is still further provided with a method for producing a substrate, wherein there is used one or more guide members having a viscosity being equal or higher than a viscosity of said molding material at the molding temperature.

### BRIEF DESCRIPTION OF THE DRAWINGS

Fig. 1 is a cross-sectional view schematically illustrating one of the embodiments of a mold for molding a substrate according to the present invention.
Figs. 2(a), 2(b) and 2(c) are cross-sectional views schematically illustrating one of the embodiments of an optical fiber array based on a substrate molded with a mold for molding a substrate according to the present invention.
Figs. 3(a) and 3(b) schematically illustrates another embodiment of an optical fiber array, using a cylindrical member, based on a substrate produced with a mold for molding a substrate according to the present invention. Fig. 3(a) is a cross-sectional view, and Fig. 3(b) is a partially enlarged view.
Fig. 4 is a perspective view schematically illustrating an example of a conventional optical fiber array.
Fig. 5 is a perspective view schematically illustrating another example of a conventional optical fiber array.
Fig. 6 is a perspective view schematically illustrating an embodiment of a method for producing a mold for molding a substrate of the present invention.

### DESCRIPTION OF THE PREFERRED EMBODIMENT

Preferred embodiments of a mold for molding a substrate and a method for producing substrates using the mold according to the present invention will be described in more detail below referring to drawings.

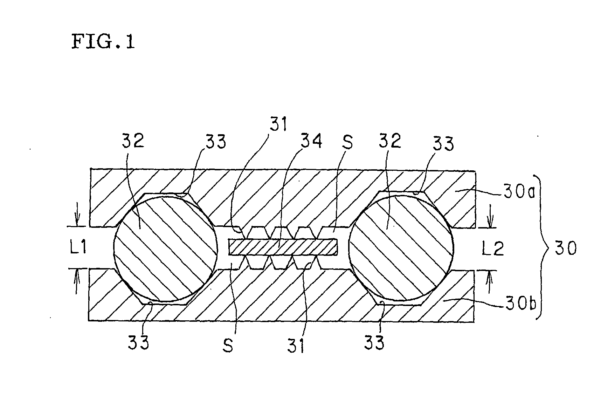

As shown in Fig. 1, a mold 30 for molding a substrate according to the present invention comprises a pair of two horizontally split sections, i.e. upper and lower mold parts 30a and 30b, which are used to mold a substrate having a predetermined pattern on both upper and lower sides by pressing a molding material 34 charged in a space S formed by the opposing internal surfaces of the upper and lower mold parts 30a and 30b, wherein such a mold for molding substrate 30 is characterized in that the upper and lower mold parts 30a and 30b are provided with one or more guide grooves 33 formed at a predetermined position on the opposing internal surfaces thereof to receive said one or more guide members 32, and being interposed between the internal surfaces at the predetermined position so as to maintain the vertical and horizontal alignment positions constant for said upper and lower mold parts 30a and 30b, thereby a substrate having a pattern corresponding to the predetermined patterns with high precision in vertical and horizontal positions on both upper and lower sides of the substrate is molded by pressing simultaneously one or more of the guide members 32 received in said one or more guide grooves 33 and said molding material 34 charged in the space S defined by the opposing internal surfaces of the mold parts.

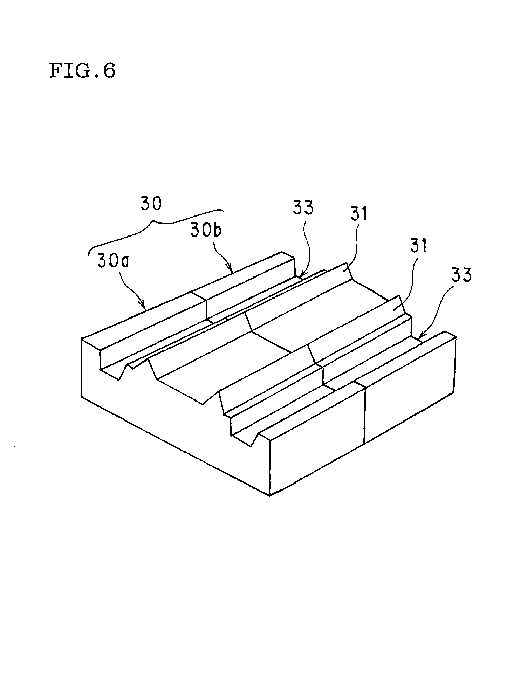

Incidentally, when a mold for molding a substrate according to the present invention is produced, it is preferable that machining is conducted under the condition that the upper and lower mold parts 30a and 30b are arranged in parallel as shown in Fig. 6 to simultaneously produce the upper and lower mold parts 30a and 30b. One may form a mold having guide grooves 33 and reversal grooves 31 of which relative positions match each other with very high precision on the internal surfaces of the upper and lower mold parts 30a and 30b. Since the relative positions of the guide grooves 33 and the reversal grooves 31 of the upper and lower mold parts 30a and 30b match each other with very high precision, thus produced mold 30 for molding a substrate is preferable in the point that predetermined patterns (reversed configuration of reversal grooves 31) can be disposed on the upper and lower sides of the substrate so that the patterns corresponding to the predetermined patterns are formed with very high precision at vertical and horizontal positions.

Moreover, the method for producing a substrate according to the present invention is characterized by receiving one or more guide members 32 in one or more guide grooves 33 formed on the mold 30 for molding a substrate as described in the above, charging a molding material 34 into the space S defined by the opposing internal surfaces of said upper and lower mold parts 30a and 30b, and, pressing simultaneously said one or more guide members 32 and the molding material 34, thereby a substrate having predetermined patterns corresponding to an inverted profile of grooving press die 31 with high precision in vertical and horizontal positions on both upper and lower surfaces of the substrate is obtained. (See Fig. 1)

By adopting the aforementioned configuration for the mold for molding a substrate and the method for producing substrates using such a mold, it is possible to provide a mold for molding a substrate that can form predetermined patterns with high precision using a press technique, relative positions of which patterns being made to match each other, on both upper and lower sides of a glass substrate, a ceramic substrate, etc., used for an optical fiber array and the like, as well as a method for producing a substrate using the mold. The constituent elements of this invention are explained in more detail below.

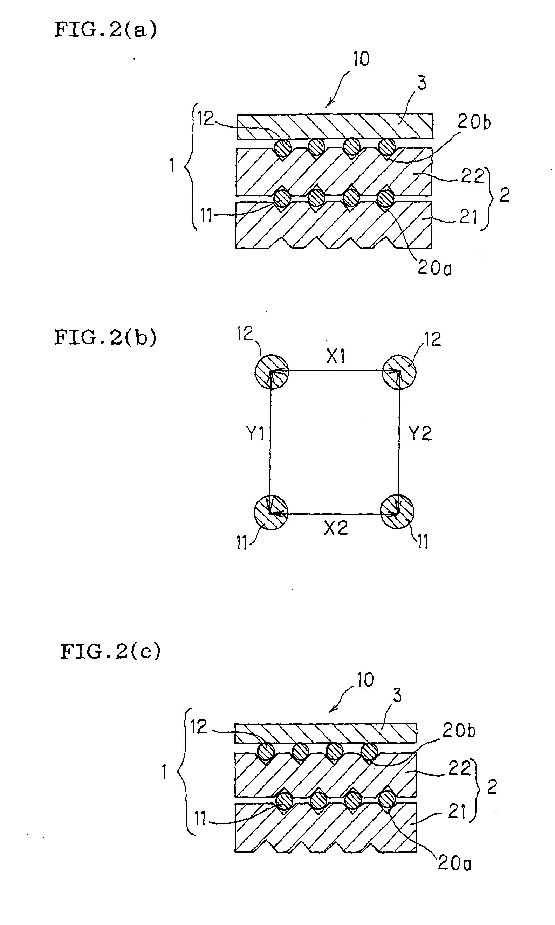

As illustrated in Fig. 2(a), a substrate 2 (21, 22) molded with the mold for molding a substrate and the method for producing substrates using the mold according to the present invention has on both of its surfaces predetermined patterns with a shape corresponding to the outer shape of optical fibers 1 (11, 12), (for the illustration in Fig. 2 (a), patterns comprising one or more V-grooves 20a, 20b having almost identical shape and placement intervals), a plurality (for the illustration in Fig. 2 (a), two pieces) of these substrates 2 (21, 22) placed in a lamination in such a way that each predetermined pattern (for the illustration in Fig. 2(a), patterns of V-grooves 20a, 20b) faces the other, and at the same time sandwiching and arranging one or more of the optical fibers 1 (11, 12) in between each of the predetermined patterns (for the illustration in Fig. 2(a), patterns of V-grooves 20a, 20b) of these multiple substrates 2 (21, 22), while maintaining their center-to-center distance between each other almost identical transverse-wise (for the illustration in Fig. 2(a), between Y1 and Y2) and juxtaposition-wise (for the illustration in Fig. 2(a), between X1 and X2).

In this case, as illustrated in Fig. 2(a), in order to improve reliability of the optical fiber array 10 comprising the substrate 2, which is molded with the mold for molding a substrate and the method for producing substrates using the mold according to the present invention, by causing each of the elements affixed more securely, the optical fiber array 10 may be further provided with a fixing member 3 to press and affix the optical fiber 12 portion of one or more of the optical fibers 1 (11, 12) arranged on one of the surfaces of the substrate 22 with the other side being exposed, except for the optical fiber 11 that is sandwiched and aligned in between the both surfaces of substrate 2 (21, 22).

For the optical fibers 1 (11, 12) to be arranged and secured on the substrate 2 (21, 22), which is molded with the mold for molding a substrate and the method for molding substrates using the mold according to the present invention, there is no specific limitation. Usually, the optical fibers 1 (11, 12) is arranged and secured in a bare condition with its external coating removed.

Concerning the size of the optical fibers 1 (11, 12) to be arranged and secured on the substrate which is molded with the mold for molding a substrate and the method for producing substrates using the mold according to the present invention, for example, a fiber having its outer diameter of 0.125 mm and an outer diameter of its external coating between 0.25 to 0.90 mm can be mentioned.

While there is no specific limitation for the material of the substrate 2 (21, 22) which is molded with the mold for molding a substrate and the method for producing substrates using the mold according to the present invention, for example, since it is desirable to make it translucent when a UV-curable adhesive is used to affix optical fibers 1 (11, 12) to the aforementioned fixing member 3 to be used as necessary, those comprising borosilicate glass can be mentioned as a preferred example.

For the predetermined patterns with the shape corresponding to the outer shape of optical fibers 1 (11, 12) and to be formed on both upper and lower sides of the substrate 2 (21, 22) which is molded with the mold for molding a substrate and the method for producing substrates using the mold according to the present invention, although there is no specific limitation as long as such patterns could be formed with high precision and with the ability of sandwiching and arranging the aforementioned optical fibers 1 (11, 12) while maintaining their center-to-center distance between each other almost identical transverse-wise (between Y1 and Y2) and juxtaposition-wise (between X1 and X2) and having almost identical shape and placement intervals with the optical fibers 1 (11, 12), a pattern with the V-grooves 20a, 20b is preferred since it enables the optical fibers 1 (11, 12) to be securely supported at three points.

As examples of the placement intervals for the V-grooves 20a, 20b, they may be arranged in such a way that the optical fibers 1 (11, 12) can be separated with a specific distance between them as illustrated in Fig. 2(a), or alternatively, they may be arranged tightly so that the optical fibers 1 (11, 12) could be in contact with each other although the latter is not illustrated.

As another example of the placement intervals for the V-grooves 20a, 20b, they may be arranged with a half-pitch shift between the two sides of the substrate 2 (21, 22), as illustrated in Fig. 2(c). Configuring them in this manner enables the optical fibers 1 (11, 12) to be arranged in a two-dimensional zigzag fashion to diversify the arrangement pattern.

For the fixing member 3 to be used as necessary in the optical fiber array 10 using the substrate 2, which is molded with the mold for molding a substrate and the method for producing substrates using the mold according to the present invention, although there is no specific limitation as long as it is capable of pressing and securely affixing the optical fibers 1 (11, 12) arranged on top of the substrate 2 (21, 22) against the substrate 2 (21, 22), since it is desirable to make it translucent when a UV-curable adhesive is used to affix optical fibers 1 (11, 12) to the substrate 2 (21, 22), those comprising borosilicate glass can be mentioned as a preferred example.

For the method of affixing the optical fibers 1 (11, 12) arranged on top of the substrate 2 (21, 22), which is molded with the mold for molding a substrate and the method for producing substrates using the mold according to the present invention, onto the substrate 2 (21, 22), a method can be mentioned by way of an example wherein the optical fibers 1 (11, 12) are first affixed provisionally with an adhesive agent onto the predetermined pattern, for example V-grooves 20a, 20b, that are formed on the substrate 2 (21, 22), after which the fixing member 3 is affixed and, finally, the substrate 2 (21, 22), a cylindrical member 4 as described later, and the fixing member 3 are affixed permanently.

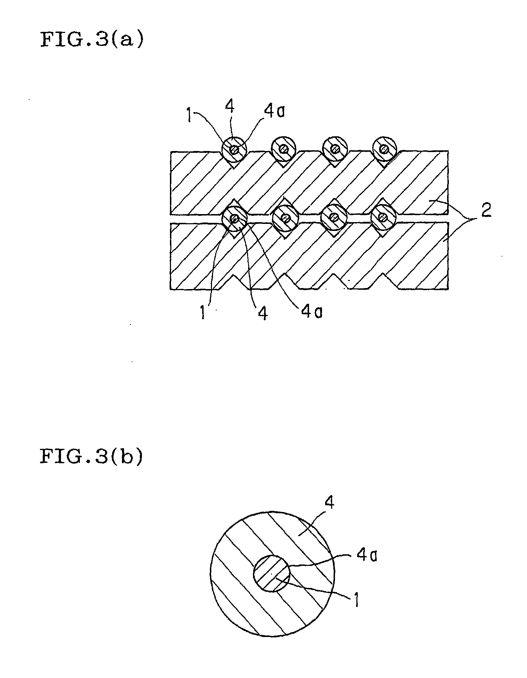

As illustrated in Fig. 3 (a) and its partially enlarged view, Fig. 3 (b), an optical fiber array comprising the substrate 2, which is molded with the mold for molding a substrate and the method for producing substrates using the mold according to the present invention, may also comprise the optical fiber 1 arranged for example on V-grooves on the substrate 2, in a condition where it is inserted and encased in a cylindrical member 4 comprising, typically, borosilicate glass and having a through hole 4a, while maintaining their transverse and juxtaposing center-to-center distances almost identical between them.

Since an optical fiber array configured as described above enables provision of high precision predetermined patterns, typically V-grooves, on both sides of a substrate with almost identical shapes and placement intervals, and as it also enables more accurate and simplified positioning of optical fibers on a substrate, the transverse and juxtaposing center-to-center distances between each of a multiple number of optical fibers aligned two dimensionally and laminated on the substrate can be accurately set.

While there is no specific limitation with regard to the material for the mold for molding a substrate according to the present invention, from the standpoint of heat resistance at high temperatures, for example, tungsten carbide (WC), various types of ceramics, or others are preferred.

Concerning the material for the guide member 32, as shown in Fig. 1, used in the mold for molding a substrate and the method for producing substrates using the mold according to the present invention, borosilicate glass is preferred as in the case of the forming material 34 that becomes a substrate after molding.

Furthermore, concerning the guide member 32, its viscosity at the molding temperature is preferably equal to or higher than the viscosity of the molding material 34 at the molding temperature. If the viscosity of the guide member 32 at the molding temperature is lower than the viscosity of the molding material 34 at the molding temperature, the guide member 32 will collapse prior to the pressing, making it impossible to thoroughly demonstrate the functionality of maintaining the transversal distance constant between the opposing internal surfaces (for the illustration in Fig. 1, between L1 and L2).

As described in the above, the present invention enables provision of a mold for molding a substrate that can form predetermined patterns with high precision using a press technique (e.g., a glass-press and a ceramic powder molding), relative positions of these patterns being made to match each other, on both upper and lower sides of a glass substrate, a ceramic substrate, etc., used for an optical fiber array and the like, a method for producing a substrate using the mold, and the substrate.

## Claims

1. A mold for molding a substrate comprising a upper part and lower part of mold formed by dividing the mold into by upper and lower portions; said mold being used to mold a substrate having a predetermined pattern on both upper and lower sides by pressing a molding material charged in a space defined by internal surfaces opposing each other of said upper and lower mold parts, **characterized in**
**that** one or more guide grooves are provided in said upper and lower mold parts at a predetermined position within said internal surfaces of the upper and lower mold parts opposing each other to receive said one or more guide members by being interposed between said internal surfaces to keep the vertical and horizontal alignment positions constant for said upper and lower mold parts, and
**that** said mold is so constructed that a substrate is formed in such a manner that patterns corresponding to the predetermined patterns are formed with high precision in vertical and horizontal positions on both upper and lower sides of the substrate, by pressing simultaneously said one or more of guide members received in said guide grooves and said molding material charged in a space defined by said opposing internal surfaces.

2. A substrate, which comprises a substrate having patterns corresponding to predetermined patterns on both upper and lower sides of said substrate with high precision in vertical and horizontal positions; said substrate being formed by pressing simultaneously a guide member and a molding material charged in a space defined by internal surfaces of said upper and lower mold parts opposing each other; and the substrate being formed with a molding material only.

3. A method for producing a substrate, comprising the step of receiving one or more guide members in said one or more guide grooves formed on a mold for molding a substrate as recited in Claim 1, charging a molding material in a space defined by said opposing internal surfaces of said upper part and lower mold part, pressing simultaneously said one or more guide members and said molding material to mold said substrate having a pattern corresponding to predetermined patterns with high precision in vertical and horizontal positions on both upper and lower sides thereof.

4. A method for producing a substrate according to Claim 3, wherein there is used one or more guide members having a viscosity being equal or higher than a viscosity of said molding material at the molding temperature.
